# EUROPÄISCHE PATENTSCHRIFT

(11) **EP 0 989 666 B1**
(45) Veröffentlichungstag und Bekanntmachung des Hinweises auf die Patenterteilung: **05.11.2003**
(21) Anmeldenummer: 99117060.6
(22) Anmeldetag: 30.08.1999
(51) Int. Cl.: H02P 7/622

(54) **System zur Drehzahlsteuerung von Wechselstrom-Motoren**
System for speed control of AC motor
Système de commande de vitesse de moteurs AC

(30) Priorität: 21.09.1998 DE 19843106
(43) Veröffentlichungstag der Anmeldung: 29.03.2000
(73) Patentinhaber: ebm Werke GmbH & Co. KG, 74673 Mulfingen (DE)
(72) Erfinder: Lelkes, Andreas, Dr.-Ing., 74653 Künzelsau (DE); Krotsch, Jens, Dipl.-Ing. (FH), 97996 Niederstetten (DE)
(74) Vertreter: Patentanwälte Dr. Solf & Zapf

(56) Entgegenhaltungen:
- EP-A- 0 408 045
- WO-A-97/20381
- GB-A- 1 404 019
- US-A- 4 134 038
- PATENT ABSTRACTS OF JAPAN vol. 010, no. 209 (E-421), 22. Juli 1986 (1986-07-22) & JP 61 049665 A (MEIDENSHA ELECTRIC MFG CO LTD), 11. März 1986 (1986-03-11)

## Beschreibung

Die vorliegende Erfindung betrifft ein System zur Drehzahlsteuerung von Wechselstrom-Motoren, insbesondere Kondensatormotoren oder Spaltpolmotoren, wobei eine dem Motor vorgeschaltete, steuerbare elektronische Schalteinrichtung von einer Steuereinheit so angesteuert wird, daß aus einer sinusförmigen Eingangswechselspannung eine zur Drehzahlveränderung variierbare Motorwechselspannung erzeugt wird.

Kondensator oder Spaltpolmotoren werden in de Regel am Einphasen-Wechselstromnetz betrieben und beispielsweise zum. Antrieb von Ventilatoren, Pumpen oder dergleichen verwendet. Bei solchen Antrieben, z.B. bei Ventilatoren, ist es häufig erforderlich, daß verschiedene Förderleistungen (Luftleistungen), üblicherweise in bestimmten Abstufungen, für unterschiedliche Betriebszustände zur Verfügung stehen müssen. So sollen z.B. bei Dunstabzugshauben verschiedene Lüfter-Drehzahlen zur Veränderung (Anhebung/Reduzierung) der Luftleistung möglich sein. Auch in Klimaanlagen, Wärmetauschern oder - ganz allgemein - bei Lüfter- und Pumpenantrieben (Strömungsmaschinen) ist häufig eine vor allem stufige Verstellung der Drehzahl erforderlich.

Bei kleineren Leistungen ist es dazu durchaus noch üblich, über einen Stufenschalter unterschiedlich große Vorwiderstände in den Strompfad des Motors zu schalten, um auf diese Weise eine Reduzierung der Motorspannung und damit eine Drehzahlveränderung zu erreichen. Dieses Verfahren ist jedoch sehr unwirtschaftlich, da die am Widerstand abfallende Spannung Verlustleistung verursacht, d.h. in Wärme umgesetzt wird, die in vielen Fällen zusätzlich noch abgeführt werden muß.

Aus der DE 42 22 431 A1 ist eine stufige Wicklungsumschaltung für Einphasen-Elektromotoren bekannt, bei der mittels mehrerer Triacs oder Thyristoren zum Zwecke der Drehzahlveränderung zwischen mehreren Hilfswicklungen umgeschaltet werden kann. Diese Wicklungsumschaltung ist jedoch aufwendig, da Wicklungsanfänge und Wicklungsenden zum Zwecke des Anschlusses herausgeführt werden müssen. Zudem ist für jede Schaltstufe ein gesondertes Schaltelement (Triac, Thyristor) vorzusehen.

Ein System der oben genannten, gattungsgemäßen Art ist aus der DD 94 666 bekannt. Diese Druckschrift beschreibt konkret ein Verfahren zur Drehzahlstellung kommutatorloser Induktionsmotoren, insbesondere von Asynchron-Kurzschlußläufermotoren. Dabei ist dem Motor bzw. der Motorwicklung eine Schalteinrichtung in Form von zwei antiparallel geschalteten Tyristoren vorgeschaltet, die von einer Steuereinrichtung so angesteuert werden, daß jeweils ganze Halboder Vollwellen der Netzspannung gesperrt bzw. freigegeben (durchgelassen) werden. Hierdurch kann die Frequenz der Motorspannung verändert werden. Es hat sich aber gezeigt, daß eine solche Ansteuerung einen relativ schlechten Wirkungsgrad zur Folge hat.

Ähnliche Verfahren sind aus der DD 216 586 und der DE 28 42 391 A1 jeweils bekannt, allerdings speziell zur Anwendung für Dreiphasen-Drehstrom-Motoren. Auch hierbei werden aber jeweils ganze Wellen der Netzspannung gesperrt bzw. als Motorspannung durchgelassen.

Die DE 38 30 196 A1 beschreibt ein Verfahren zur Nutzung von Phasenanschnittsteuerungen als Frequenzumrichter. Auch dabei werden jeweils ganze Wellen der Netzspannung gesperrt, indem stets ein entsprechend großer, stationärer (konstanter) Anschnittwinkel vorgegeben wird. Es handelt sich somit eigentlich nicht um eine Phasenanschnittsteuerung im herkömmlichen Sinne, weil die einzelnen Wellen stets nur ganz oder gar nicht durchgelassen, aber nie wirklich nur teilweise angeschnitten werden. Durch rhythmischen Wechsel zwischen freigegebenen und gesperrten Halbwellen wird ein Spannungsverlauf geschaffen, der als Grundfrequenz die gewünschte Nutzfrequenz erhält.

Es ist nun andererseits auch aus der DE 34 27 479 A1 ein Verfahren zur Anschnitt-Steuerung der Spannungshalbschwingungen eines Drehstrom-Stellers mit zwei antiparallel steuerbaren Strompfaden je Phase für einen Käfigläufermotor bekannt. Dabei werden zum Betrieb von Drehstrommotoren mit abgestuften Betriebsdrehzahlen nach verschiedenen Mustern positive und/oder negative Halbwellen derart angeschnitten, daß eine von der Netzfrequenz abweichende Frequenz zur entsprechenden Drehzahländerung erreicht wird. Dieses Verfahren-bezieht sich aber ausschließlich auf Drehstrommotoren und nicht auf Wechselstrommotoren, wie Kondensator- oder Spaltpolmotoren.

Alle diese bekannten Steuersysteme haben hauptsächlich den Nachteil eines relativ schlechten Wirkungsgrades. Zum Teil treten auch störende Geräusche auf.

Es ist auch aus GB1404019 ein System zur Drehzahlsteuerung von Wechselstrom-Asynchronmotoren bekannt, wobei eine dem Motor vorgeschaltete, steuerbare elektronische Schalteinrichtung von einer Steuereinheit so angesteuert wird, dass aus einer sinusförmigen Eingangswechselspannung eine zur Drehzahlveränderung variierbare Motorwechselspannung erzeugt wird, wobei die Steuereinheit derart ausgebildet ist, dass die Motorwechselspannung bezuglich ihrer Grundfrequenz und/oder Amplitude durch Phasenanschnitt veränderbar ist, und wobei durch die Steuereinheit bestimmte Halb- oder Vollwellen der sinusformigen Eingangswechselspannung unter Bildung von Spannungslucken voltständig gesperrt werden.

Der vorliegenden Erfindung liegt die Aufgabe zugrunde, ein Steuersystem der gattungsgemäßen Art zu schaffen, mit dem ein optimaler, geräuscharmer Motorbetrieb, insbesondere mit besserem Wirkungsgrad und Drehmomentverlauf, über einen großen Drehzahlstellbereich hinweg sowie vorzugsweise weitgehend lastunabhängig erreicht wird. Dabei soll die Steuerung zudem auch mit technisch einfachen und kostengünstigen Mitteln realisierbar sein.

Erfindungsgemäß wird dies dadurch erreicht, daß die Steuereinheit derart ausgebildet ist, daß die Motorwechselspannung bezüglich ihrer Grundfrequenz und/oder Amplitude durch Phasenanschnitt veränderbar ist, wobei die einzelnen Halbwellen sich periodisch wiederholende Zündwinkel aufweisen. Die Periodenlänge bestimmt dabei die Grundfrequenz. Dadurch ist es erfindungsgemäß möglich, aus der Eingangswechselspannung - üblicherweise aus der Netzspannung - nahezu beliebig viele bezüglich Grundfrequenz und/oder Kurvenver lauf unterschiedliche Motorwechselspannungen zu generieren, wodurch auch ein stets optimaler Motorbetrieb, insbesondere mit günstigem Wirkungsgrad und hohem Anlaufmoment erreichbar ist.

Die Grundfrequenz ist - in an sich bekannter Weise - dadurch veränderbar, daß durch die Steuereinheit bestimmte Halb- oder Vollwellen der sinusförmigen Eingangswechselspannung unter Bildung von Spannungslücken gesperrt und bestimmte andere Wellen durchgelassen werden. Erfindungsgemäß in Kombination damit ist ein Phasenanschnitt von aufeinanderfolgenden Spannungs-Halbwellen mit verschiedenen "asymmetrischen" Phasenanschnittwinkeln (Zündwinkeln) durchführbar. Hierbei handelt es sich um eine dynamische Phasenanschnittsteuerung. In einer besonders vorteilhaften Ausgestaltung der Erfindung - z.B. für die 25 Hz-Grundfrequenz - ist dabei vorgesehen, daß bei einer auf eine Spannungslücke folgenden Vollwelle der Phasenanschnittwinkel der ersten Halbwelle größer als der Phasenanschnittwinkel der nachfolgenden zweiten Halbwelle ist, und zwar insbesondere mit derartigem Verhältnis, daß ein aus der so erzeugten Motorwechselspannung resultierender Motorstrom im wesentlichen symmetrisch zur Null-Linie verläuft. Diese erfindungsgemäße Maßnahme beruht auf der Erkenntnis, daß es bei bekannten Verfahren, wobei jeweils ganze Wellen gesperrt und hierdurch Spannungslücken erzeugt werden, bei Auftreten der auf eine Spannungslücke folgenden Welle zunächst zu einem relativ steilen Stromanstieg kommt, und zwar wegen der zu diesem Zeitpunkt noch fehlenden Gegen-EMK in der Motorwicklung. Nachfolgend nimmt dann aber der Strom wegen der sich durchflutungsbedingt aufbauenden EMK ab, so daß ein asymmetrisher Stromverlauf relativ zur Null-Linie entseht; der Strom hat dann einen Gleichspannungsanteil, weil er relativ zur Null-Linie verschoben ist, was in der Folge auch zu einem schlechten Wirkungsgrad führt. Durch die erfindungsgemäße dynamische Phasenanschnittsteuerung wird diese Asymmetrie des Motorstroms vorteilhafterweise kompensiert, so daß ein zur Null-Linie symmetrischer Motorstromverlauf ohne Gleichspannungsanteil erreicht werden kann. Hierdurch werden der Wirkungsgrad verbessert und der Energieverbrauch minimiert.

Weitere vorteilhafte Ausgestaltungsmerkmale der Erfindung sind in den Unteransprüchen sowie der folgenden Beschreibung enthalten.

Anhand der Zeichnungen sollen nun die Erfindung sowie auch ihr technischer Hintergrund genauer erläutert werden. Es zeigen:
- Fig. 1: Zeit-Diagramme für den Spannungs-, Strom- und Leistungsverlauf einer bekannten Phasenanschnittsteuerung nach dem Stand der Technik,
- Fig. 2: ein Motorkennlinien-Diagramm für eine solche bekannte Steuerung,
- Fig. 3: Zeit-Diagramme analog zu Fig. 1 einer ebenfalls bekannten Steuerung, wobei ohne Phasenanschnitt jeweils ganze Wellen gesperrt werden,
- Fig. 4: Zeit-Diagramme analog zu Fig. 1 bzw. 3 zu einem Steuersystem, nach dem Stand der Technik,
- Fig. 5: ein Blockschaltbild des erfindungsgemäßen Steuersystems in einer ersten Schaltungsvariante,
- Fig. 6: Zeit-Diagramme analog zu Fig. 4 zu einer bevorzugten Ausführungsform des erfindungsgemäßen Steuersystems,
- Fig. 7: ein Motorkennlinien-Diagramm ähnlich Fig. 2, jedoch für die erfindungsgemäße Steuerung,
- Fig. 8: ein Blockschaltbild einer zweiten Schaltungsvariante des erfindungsgemäßen Systems,
- Fig. 9: Spannungs- und Stromkurven zu der zweiten Schaltungsvariante nach Fig. 8,
- Fig. 10: gemessene Drehmomentkennlinienschar zur Schaltung nach Fig. 8 im Vergleich zur Drehmomentkennlinie eines direkt am Netz betriebenen Motors ohne Steuerung,
- Fig. 11: ein Blockschaltbild einer dritten Schaltungsvariante als Alternative zu Fig. 5 und 8 und
- Fig. 12: Diagramme zur Ausführung nach Fig. 11.

In den verschiedenen Figuren der Zeichnung sind gleiche Teile stets mit den gleichen Bezugszeichen versehen und werden daher in der Regel jeweils nur einmal beschrieben.

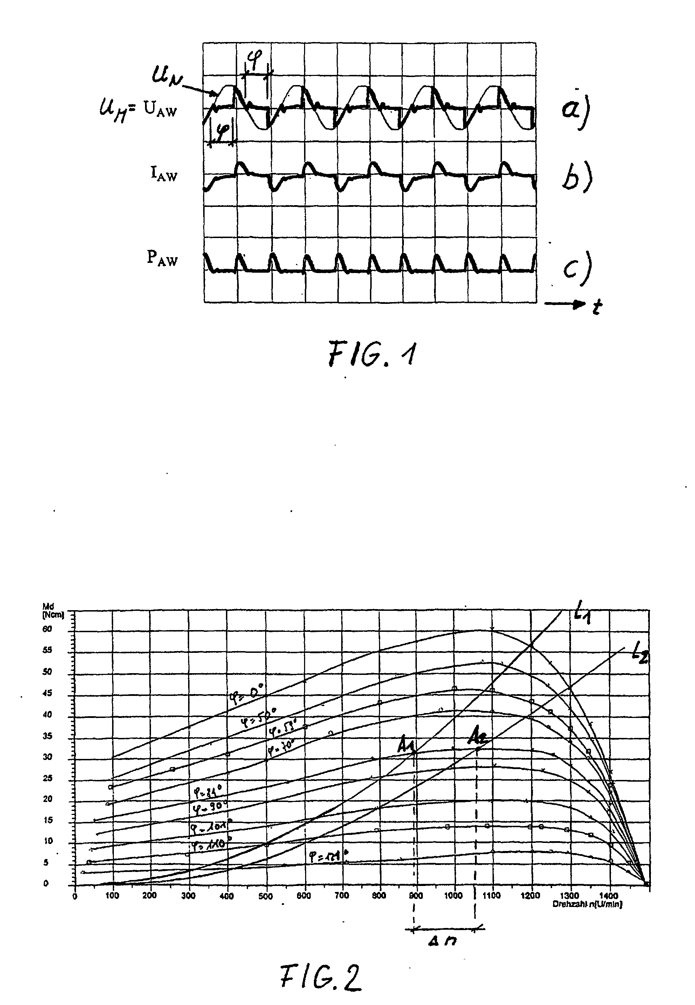

Gemäß Fig. 5 ist einem Wechselstrom-Motor M eine steuerbare elektronische Schalteinrichtung 2 vorgeschaltet. Die Schalteinrichtung 2 wird vorzugsweise durch elektronische Leistungsschalter, Insbesondere Triac oder Thyristor gebildet, wobei zwischen Steuereinheit 4 und Leistungsschalter auch eine zusätzliche Treiberstufe vorgesehen sein kann. Der Motor M ist hier als Kondensatormotor ausgebildet, der eine Arbeitswicklung AW und parallel dazu eine Reihenschaltung einer Hilfswicklung HW mit einem Kondensator C aufweist. Der Motor M kann auch als Spaltpolmotor ausgebildet sein, wobei die Hilfswicklung HW und der Kondensator C entfallen. Die Schalteinrichtung 2 wird von einer Steuereinheit 4 so angesteuert, daß aus einer sinusförmigen Eingangswechselspannung (Netzspannung) U_{N} eine zur Veränderung der Motordrehzahl variierbare Motorwechselspannung U_{M} erzeugt wird. Bevor näher auf die Erfindung eingegangen wird, sollen bekannte Verfahren anhand der Fig. 1 bis 3 erläutert werden.

Bei einer bekannten Phasenanschnittsteuerung - siehe hierzu Fig. 1 - wird ein in Reihe zum Motor liegendes Schaltelement (Triac oder Thyristor) verzögert, d.h. erst um einen bestimmten Phasen- bzw. Zündwinkel ϕ nach dem normalen Nulldurchgang der Eingangswechselspannung U_{N} eingeschaltet. Mit dieser Zündverzögerung kann die Amplitude der Motorwechselspannung U_{M} gesteuert werden, indem der Zündwinkel verändert wird. In Fig. 1 ist beispielhaft der Zustand bei einem Zündwinkel ϕ = 117° dargestellt. Da ein Kondensatormotor meist mit großem cos ϕ arbeitet, verhält er sich bei einer Phasenanschnittsteuerung ähnlich einer ohmschen Last. Dies bedeutet, daß das Schaltelement in der Nähe des Spannungs-Nulldurchgangs wieder von selbst ausschaltet und erst beim nächsten Zündimpuls wieder eingeschaltet wird. Die vom Zündwinkel ϕ abhängige Veränderung der Amplitude der Motorspannung führt zu einer entsprechenden Veränderung der Drehzahl des Motors. Bei einer derartigen Steuerung bleibt die Synchronfrequenz des Motors unverändert; es wird eine sogenannte Schlupfdrehzahlsteuerung realisiert, die jedoch mit erhöhter Verlustleistung verbunden ist. Die Abgabeleistung des Motors wird dadurch erniedrigt, daß ein Teil der Luftspaltleistung im Läufer in Wärme umgewandelt wird. Die Schlupfdrehzahlsteuerung ändert nicht die Leerlaufdrehzahl, sondern die DrehmomentDrehmoment-Drehzahlkennlinie, wobei mit zunehmender Erhöhung des Zündwinkels flachere Kennlinien erzeugt werden.

In Fig. 2 sind zugehörige Motorkennlinien dargestellt, die aus unterschiedlichen Zündwinkeln resultieren. Wie hieraus deutlich wird, ändert sich z.B. die Drehzahl bei einem Übergang von einer ersten Belastungskennlinie L₁ auf eine zweite Belastungskennlinie L₂ im angenommenen Arbeitspunkt A₁ auf A₂ deutlich um Δn, d.h. im angenommenen Beispiel um ca. 170 U/min. Der Drehzahlbereich ist also stark von der Belastungskennlinie abhängig. Eine derartige Steuerung ändert allerdings nicht nur die Amplitude des Motorstromes, sondern sie- erzeugt auch Oberwellen. Hierbei bildet die dritte Oberwelle mit 150 Hz den größten Anteil. Die Oberwellen verursachen Zusatzverluste und verschlechtern dadurch den Wirkungsgrad. Außerdem erhöhen sie die Drehmomentwelligkeit und den'Geräuschpegel.

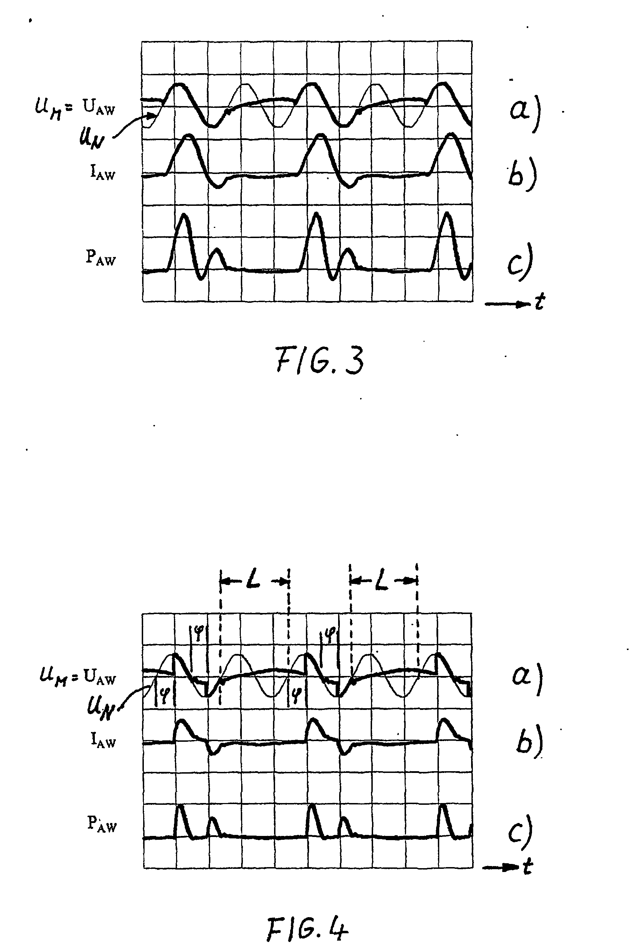

In Fig. 3 ist die Wirkungsweise einer anderen bekannten Steuerung veranschaulicht, wobei jeweils ganze Wellen der Eingangswechselspannung U_{N} gesperrt bzw. durchgelassen werden. Durch dieses Ausschneiden von Halb- bzw. Vollwellen verändert sich die Grundfrequenz des Motors; er wird dadurch ähnlich wie mit einem Frequenzumrichter betrieben. Bei einer vorgegebenen Netzfrequenz von 50 Hz ergibt sich beim dargestellten Beispiel nach Fig. 3 eine Frequenz von 25 Hz, mit der der Motor betrieben wird. Der daraus resultierende Motorstrom I_{M} ist dann nicht mehr sinusförmig. Wie sich deutlich aus Fig. 3 ergibt, weisen die beiden Halbwellen des Stromes eine starke Asymmetrie auf. Es ist erkannt worden, daß die Ursache dafür ist, daß sich der Fluß während der zwei gesperrten Halbwellen abbaut. Die Gegen-EMK ist deshalb während der ersten freigegebenen Halbwelle wesentlich kleiner als während der zweiten, nachfolgenden Halbwelle. Dies führt dazu, daß der Strom in der ersten Halbwelle der Spannung größer wird. Diese Asymmetrie verursacht einen Gleichstromanteil im Motorstrom (Nullpunktverschiebung), der einerseits den Motor bremst und andererseits neben zusätzlichen Verlusten in der Wicklung auch eine Belastung des Wechselstromnetzes verursacht. Ein weiterer Nachteil dieses bekannten Steuerungsprinzips ist, daß diese Spannungsform den Motor in die Sättigung bringen kann, was den Wirkungsgrad wesentlich verschlechtert. Dadurch ist die Aufnahmeleistung des Motors in diesem Arbeitspunkt deutlich größer als bei einer herkömmlichen Phasenanschnittsteuerung.

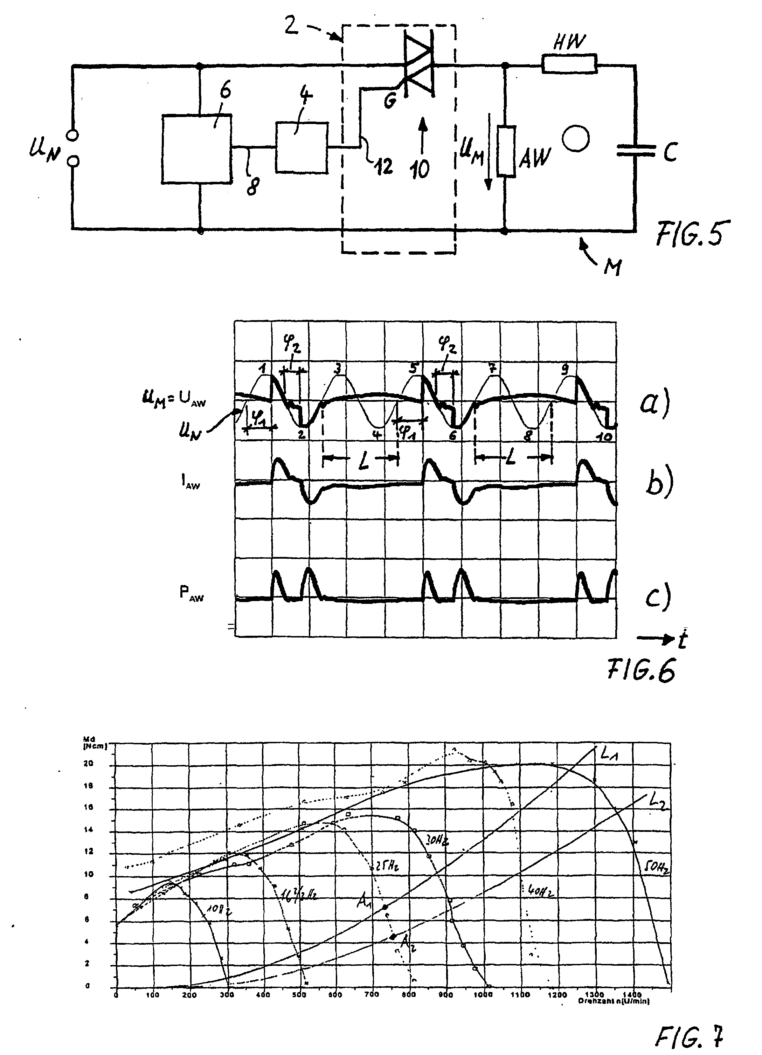

Wie sich nun aus Fig. 4 ergibt, ist ein weiteres Steuersystem dazu geeignet, beide bekannte Verfahren in Kombination vorzusehen. Dies bedeutet, daß einerseits die Grundfrequenz dadurch veränderbar ist, daß durch die Steuereinheit 4 bestimmte Wellen der sinusförmigen Eingangswechselspannung U_{N} unter Bildung von Spannungslücken L gesperrt und bestimmte andere Wellen durchgelassen werden. Andererseits ist auch ein Phasenanschnitt von den verbleibenden aufeinanderfolgenden positiven und negativen Spannungs-Halbwellen mit einem bestimmten Phasenanschnittwinkel ϕ durchführbar.

In einer bevorzugten Ausgestaltung des Steuersystems nach Fig. 5 ist gemäß Fig. 6 vorgesehen, daß bei einer auf eine Spannungslücke L folgenden Vollwelle deren beiden Halbwellen mit verschiedenen Phasenanschnittwinkel ϕ₁ und ϕ₂ angeschnitten werden. Konkret ist der Phasenanschnittwinkel ϕ₁ der ersten Halbwelle größer als der Phasenanschnittwinkel ϕ₂ der nachfolgenden zweiten Halbwelle, und zwar insbesondere so, daß der aus der so erzeugten Motorwechselspannung U_{M} resultierende Motorstrom I_{M} im wesentlichen symmetrisch zur Null-Linie verläuft.

Hierzu ist bei der ersten Schaltungsvariante nach Fig. 5 vorgesehen, daß die Steuereinheit 4 die Schalteinrichtung 2 in Abhängigkeit von mittels einer Nulldurchgangserfassungseinrichtung 6 erfaßten Nulldurchgängen der Eingangswechselspannung U_{N} ansteuert. Dazu ist die Nulldurchgangserfassungseinrichtung 6 mit der Eingangswechselspannung U_{N} verbunden und derart ausgelegt, daß bei jedem Nulldurchgang der Spannung ein Steuerimpuls über eine Signalleitung 8 an die Steuereinheit 4 abgegeben wird. Dieser Steuerimpuls dient zum Triggern des Phasenanschnittwinkels. Die Steuereinheit 4 kann dabei ein bestimmtes Phasen- bzw. Zündwinkelmuster derart vorgeben, daß mittels der elektronischen Schalteinrichtung 2 sowohl die Spannungslücken L durch Sperren bestimmter Wellen erzeugt werden als auch die verbleibenden Wellen jeweils angeschnitten werden. Für ein gänzliches Sperren einer Halbwelle wird für diese ein Winkel ϕ = 180° vorgegeben.

Hierbei ist vorteilhafterweise gemäß Fig. 6 eine dynamische Veränderung des Zündwinkelmusters möglich. Ausgehend von einer z.B. auf 25 Hz reduzierten Grundfrequenz (durch Sperrung jeder zweiten Vollwelle) werden die verbleibenden positiven und negativen Halbwellen jewells unterschiedlich angeschnitten. Dabei ist wesentlich, daß der Zündwinkel der jeweils ersten Halbwelle größer als der Zündwinkel der sich anschließenden zweiten Halbwelle ist. Wie sich aus dem Beispiel nach Fig. 6a ergibt, bedeutet dies folgendes: Die Halbwellen der Eingangswechselspannung U_{N} sind mit den Ziffern 1 bis 10 gekennzeichnet. Die erste Halbwelle wird mit einem Zündwinkel ϕ₁ von z.B. 113° angesteuert, die zweite Halbwelle mit einem kleineren Zündwinkel ϕ₂ von z.B. 79°. Nun folgen zwei Halbwellen, die dadurch gesperrt werden, daß die Schalteinrichtung 2 nicht angesteuert wird. Dies wird durch einen fiktiven Zündwinkel von 2 x 180° erreicht. Die erfindungsgemäße Vergrößerung des Zündwinkels der jeweils ersten Halbwelle nach einer Spannungslücke L führt zu einer Symmetrie der Halbwellen des Motorstromes I_{M}. Da sich - wie oben bereits erwähnt - der Fluß während der Spannungslücke abbaut, ist die Gegen-EMK während der ersten freigegebenen Halbwelle wesentlich kleiner, wodurch sich ein größerer Motorstrom ausbildet. Durch den zunächst größeren Zündwinkel ϕ₁ wird eine Verringerung der Amplitude der Motorspannung erreicht, was zu einem geringeren Strom während dieses Stromflußwinkels führt. Durch geeignete Anpassung des Zündwinkelverhältnisses der positiven und negativen Halbwelle läßt sich zumindest annähernd eine Symmetrie von Motorstrom und Leistungsaufnahme erreichen.

Durch die erfindungsgemäße Steuerung wird auch die Synchrondrehzahl verändert. So ergibt sich gemäß der Gleichung n = f/p bei einem vierpoligen Motor mit einer Polpaarzahl von p = 2 bei einer Grundfrequenz von 25 Hz eine theoretische Synchrondrehzahl von 750 U/min.

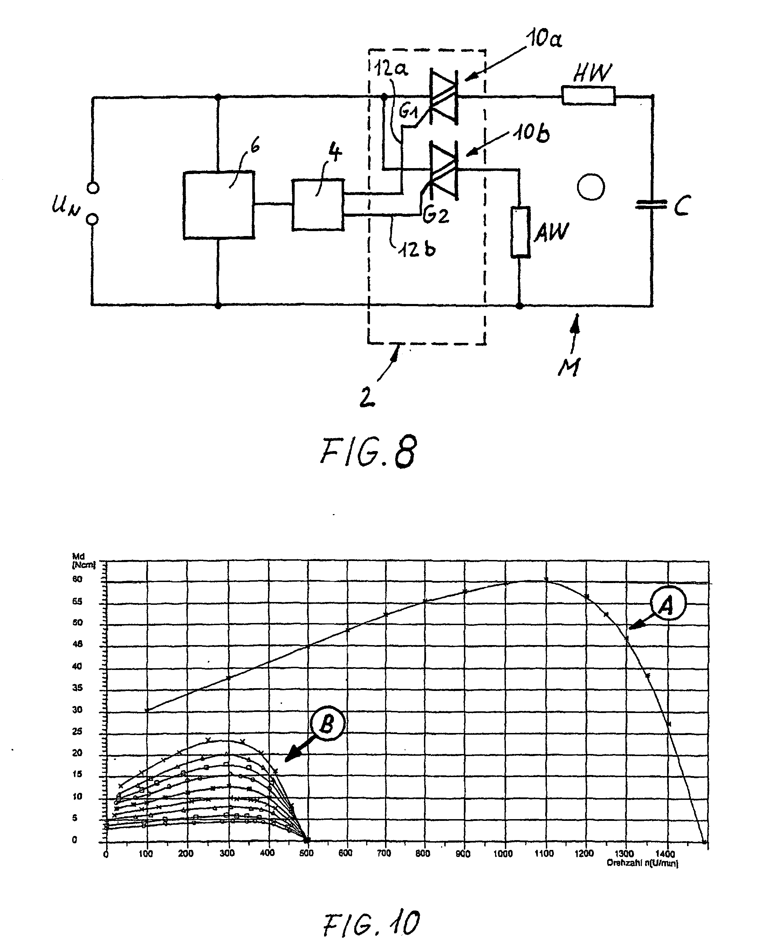

Im Diagramm nach Fig. 7 sind Drehmomentkurven für verschiedene Grundfrequenzen zwischen 10 Hz und 50 Hz dargestellt. Wie hieraus deutlich wird, ergeben sich hierdurch unterschiedliche Synchrondrehzahlen. Bestimmte Grundfrequenzen, wie z.B. 30 Hz und 40 Hz, wären mit den aus dem Stand der Technik bekannten Verfahren gar nicht zu erreichen. Mit dem erfindungsgemäßen System kann beispielsweise eine 40 Hz-Grundfrequenz mit folgendem Phasen- bzw. Zündwinkel-Muster erreicht werden: 0°, 45°, 90°, 135°, 180°, 180°, 180°, 180°, 45°, 45°. Anschließend erfolgt eine zyklische Wiederholung dieses Zündwinkelmusters. Wie oben bereits erwähnt; bedeutet dabei der Winkel 180°, daß über diesen Phasenwinkel hinweg die Schalteinrichtung 2 von der Steuereinheit 4 nicht durchgeschaltet wird. Betrachtet man nun in der Kurvenschar'nach Fig. 7 den eingezeichneten Arbeitspunkt A₁, der sich bei einem Motor mit einer Grundfrequenz von 25 Hz auf der Belastungskennlinie L₁ einstellt, so ist erkennbar, daß sich bei einer Veränderung der Belastungskennlinie von L₁ auf L₂ der Arbeitspunkt A₁ auf den neuen Arbeitspunkt A₂ einstellt. Es ist ersichtlich, daß sich die Drehzahl des Motors vorteilhafterweise nur sehr geringfügig ändert. Es kann davon gesprochen werden, daß der Drehzahlstellbereich nahezu unabhängig von der Belastungskennlinie ist.

Ein weiterer Vorteil des erfindungsgemäßen Ansteuersystems ist in einem deutlich verbesserten Anlaufmoment zu sehen,. das bei gleicher Aufnahmeleistung gegenüber herkömmlichen Phasenanschnittsteuerungen nahezu die doppelten Werte annehmen kann. Bei geeignet gewähltem Zündwinkelmuster ist es aber auch möglich, bei gleichem Anlaufmoment einen wesentlich verringerten Energieverbrauch zu erreichen.

Wie oben bereits in Bezug auf eine herkömmliche Drehzahlsteuerung mittels Phasenanschnitt erwähnt wurde, entstehen in Arbeits und Hilfswicklung Oberwellen, wobei die dritte Oberwelle mit 150 Hz den größten Anteil bildet. Mit der erfindungsgemäßen Steuerung werden andere Stromspektren erzeugt. So werden z.B. bei einer Steuerschaltung, die mit einer Betriebsfrequenz von 25 Hz arbeitet, im wesentlichen 25 Hz-, 50 Hz- und 75 Hz-Anteile erzeugt. Im Zusammenhang mit der Mechanik können die unterschiedlichen Spektren unterschiedliche akustische Geräusche erzeugen, die durch geeignete Wahl spezieller Zündwinkelmuster minimiert werden können.Durch diese zusätzlichen Möglichkeiten zur Geräuschoptimierung kann das bei herkömmlichen Phasenanschnittsteuerungen typische 100 Hz-Pfeifen vermieden werden.

Wie sich noch aus Fig. 5 ergibt, ist bei diesem Ausführungsbeispiel die elektronische Schalteinrichtung 2 vorzugsweise durch einen Triac 10 gebildet, der in Reihe dem Motor M vorgeschaltet ist, und dessen Gate G über eine Steuerleitung 12 von der Steuereinheit 4 - insbesondere einem Mikrocontroller oder ASIC - angesteuert wird. Gemäß Fig. 5 ist hierbei eine gemeinsame Ansteuerung von Arbeitswicklung AW und Hilfswicklung HW über den gemeinsamen Triac 10 vorgesehen.

Bei der zweiten Schaltungsvariante nach Fig. 8 enthält die Schalteinrichtung 2 zwei einzelne Leistungsschalter, vorzugsweise Triacs 10a und 10b, deren Gates G₁ und G₂ separat von der Steuereinheit 4 über Steuerleitungen 12a,12b angesteuert werden. Zwischen Steuereinheit 4 und Leistungsschalter kann auch eine zusätzliche Treiberstufe vorgesehen sein. Auch diese Ansteuerung erfolgt in Abhängigkeit von den Nulldurchgängen der Eingangswechselspannung U_{N}. Während bei der ersten Variante nach Fig. 5 der Strom in Arbeitsund Hilfswicklung jeweils gleichzeitig aufgebaut wird und deshalb kurz nach der Zündung keine Phasenverschiebung zwischen Arbeits- und Hilfswicklung vorhanden ist, werden nun bei der Schaltung nach Fig. 8 die beiden Wicklungen getrennt angesteuert. Der Strom in der Hilfswicklung wird früher gestartet und baut den Fluß, der in der Spannungslücke abhängig von der Rotorzeitkonstante abgebaut wurde, wieder auf, so daß der Strom in der Arbeitswicklung auch sofort ein Drehmoment erzeugen kann. Ein weiterer Vorteil ist, daß die Größe der Ströme in Arbeits- und Hilfswicklung unabhängig voneinander einstellbar sind. Diese Effekte führen zu einer weiteren Verbesserung des Wirkungsgrades. Für eine derartige Schaltung kann z.B. ein Ansteuerwinkelmuster verwendet werden, welches eine Grundfrequenz von 25 Hz erzeugt und mit den Ansteuerwinkeln ϕ₁ und ϕ₂, 180°, 180° für die Hilfswicklung sowie mit 180°, ϕ₃, ϕ₄, 180° für die Arbeitswicklung arbeitet (ϕ₁ bis ϕ₄ variabel).

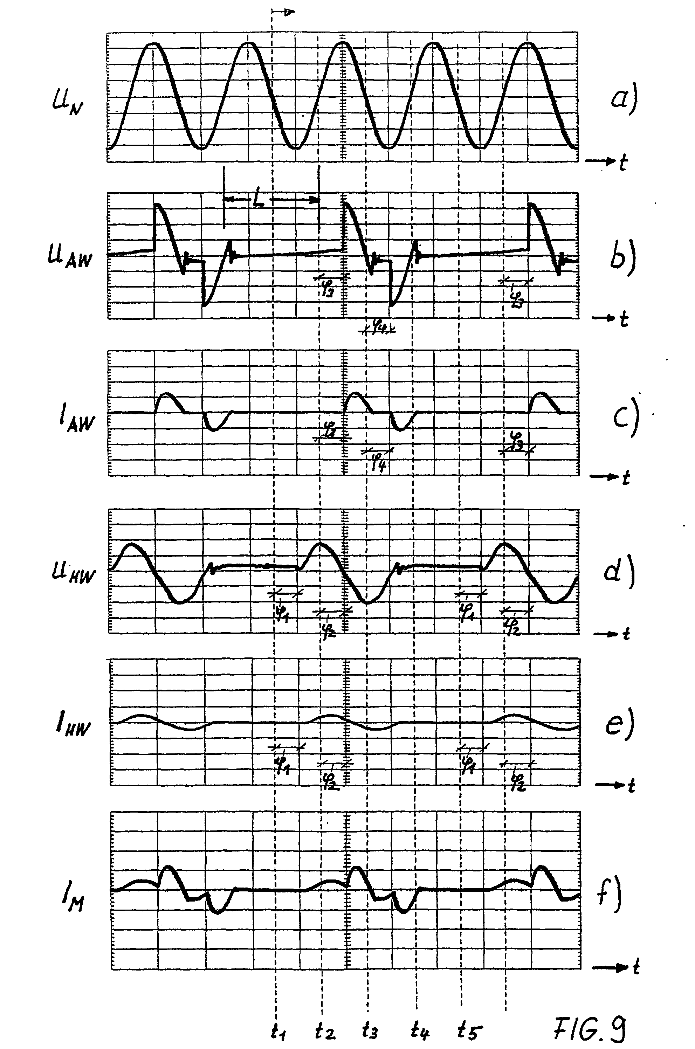

In Fig. 9 ist beispielhaft ein spezielles Ansteuermuster veranschaulicht. Dabei arbeitet die Hilfswicklung mit Werten ϕ₁ = 92°, ϕ₂ = 99°, 180°, 180°, während die Arbeitswicklung mit 180°, ϕ₃ = 88°, ϕ₄ = 99°, 180° angesteuert wird. Bei diesem konkreten Beispiel ist in Fig. 9a die Eingangswechselspannung U_{N} gezeigt, in Fig. 9b die Spannung U_{AW} an der Arbeitswicklung und in Fig. 9d die Spannung U_{HW} an der Hilfswicklung. In den Fig. 9c und 9e sind die zugehörigen Ströme I_{AW} durch die Arbeitswicklung und I_{HW} durch die Hilfswicklung dargestellt. Wie sich aus den Fig. 9d und 9e . ergibt, wird ausgehend vom Zeitpunkt t₁, dem Nulldurchgang der Eingangsspannung U_{N} in Fig. 9a, mit einem Zündwinkel ϕ₁ zunächst die Hilfswicklung eingeschaltet, so daß ein Strom I_{HW} durch die Hilfswicklung fließen kann. Die Arbeitswicklung wird zu diesem Zeitpunkt noch nicht eingeschaltet. Beim nächsten Nulldurchgang der Eingangsspannung zum Zeitpunkt t₂ werden nun die Arbeltswicklung mit einem zündwinkel ϕ₃ sowie die Hilfswicklung mit einem Zündwinkel ϕ₂ bestromt. Zum Zeitpunkt t₃, d.h. dem nächsten Nulldurchgang der Eingangsspannung, erfolgt nochmals die Einschaltung der Arbeitswicklung mit einem Zündwinkel ϕ₄, während die Hilfswicklung nicht gezündet wird. Beim nächsten Spannungsnulldurchgang zum Zeitpunkt t₄ wird keiner der beiden Triacs gezündet, so daß die Ströme durch die Arbeits- und Hilfswicklung gesperrt werden. Ab dem Zeitpunkt t₅ wiederholen sich dann die beschriebenen Zündmuster. Der Motorstrom I_{M} nach Fig. 9 f ergibt sich aus der Summe der Wicklungsströme I_{AW} und I_{HW}. Durch eine Veränderung der Zündwinkelmuster können somit die Ströme in Arbeits- und Hilfswicklung unabhängig voneinander eingestellt werden, wodurch sowohl Drehmomentkennlinie als auch Aufnahmeleistung des Motors günstig beeinflußt werden können. So ergibt sich aufgrund der Möglichkeit, die Stromamplitude in der Hilfswicklung größer zu halten und eine günstigere Phasenlage der Hilfswicklungsströme zu erreichen, auch ein deutlich besserer Wirkungsgrad.

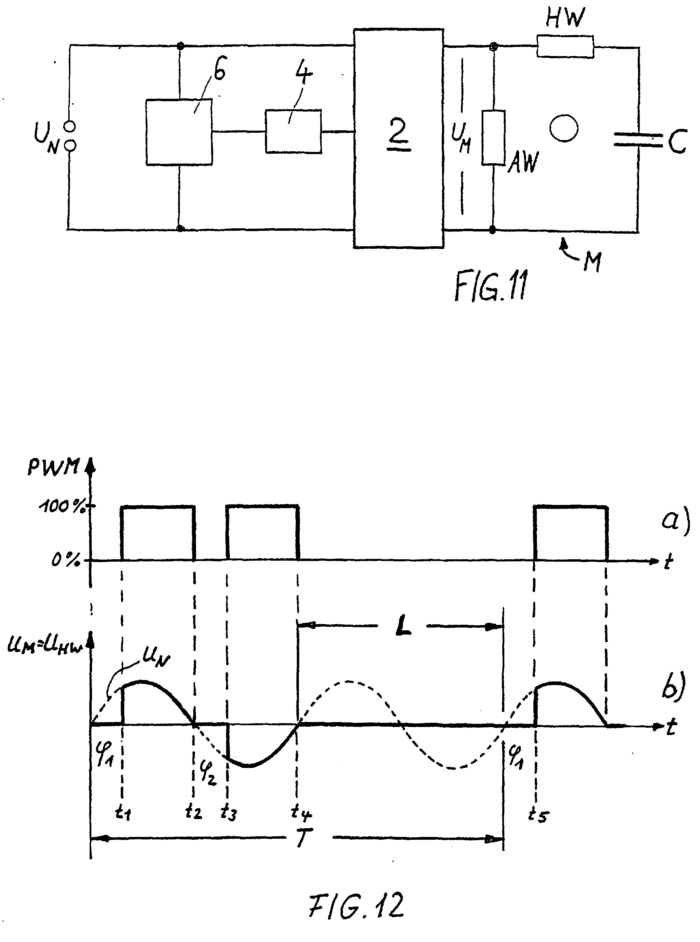

In Fig. 10 ist eine Drehzahl-Drehzahl-/Drehmomentkennlinie A eines direkt am Netz betriebenen Motors ohne Steuerung im Vergleich zu den entsprechenden Kennlinien B eines Motors dargestellt, der erfindungsgemäß mittels getrennter Ansteuerung von Arbeits- und Hilfswicklung betrieben wird. Erfindungsgemäß ist ein Zündmuster vorgesehen, welches z.B. eine Grundfrequenz des Motors von 16²/₃Hz einstellt. Für dieses Beispiel hat sich ein Zündmuster für die Arbeitswicklung AW mit Zündwinkeln von 0°, 180°, 180° und für die Hilfswicklung HW von 180°, 180°, 97° als besonders günstig für Wirkungsgrad und Drehmomentverhalten erwiesen. Die Veränderung der Höhe bzw. des Verlaufs des Drehmomentes, wie in der Kurvenschar B gemäß Fig. 10 dargestellt, kann dabei durch Variation des ersten Zündwinkels der Arbeitswicklung erreicht werden, wobei die Änderung des Zündwinkels die Amplitude der Motorspannung beeinflußt. Durch die getrennte, aber erfindungsgemäß aufeinander abgestimmte Einschaltung von Arbeits- und Hilfswicklung verbessert sich bei dieser Ausführungsform auch das Anlaufmoment des Motors deutlich und erreicht auch hier Werte, die nahezu dem doppelten Wert der herkömmlichen Phasenanschnittsteuerung entsprechen. Außerdem ist es möglich, ohne Zusatz-Hardware, d.h. nur durch Änderung des Zündwinkelmusters, die Richtung der Drehzahl zu verändern. Als besonders günstig haben sich hierbei für die Arbeitswicklung Zündwinkel von 30°, 180°, 180°, und für die Hilfswicklung von 180°, 120°, 180° ergeben.

Neben den bereits erwähnten Vorteilen ist es auch bei der Variante nach Fig. 8 möglich, die akustischen Geräusche des Motors günstig zu beeinflussen. Wenn in der Praxis festgestellt wird, daß ein durch den jeweiligen Motor angetriebenes Gerät zu Schwingungen angeregt wird, so kann durch Variation des Zündwinkelmusters der Motorstrom sogar dahingehend verändert werden, daß die störenden Schwingungen zumindest reduziert, wenn nicht sogar eliminiert werden.

Für beide Versionen nach Fig. 5 und Fig. 8 ist es die einfachste und wirtschaftlichste Möglichkeit, die optimalen Zündwinkel empirisch zu ermitteln, und zwar zur Optimierung von Wirkungsgrad und/oder Anlaufmoment und/oder Schwingungs-und/oder Geräuschverhalten und/oder Drehmoment-/Drehzahlkennlinie. Die so ermittelten Ergebnisse können in Speichermitteln der Steuereinheit 4 tabellarish gespeichert werden. Die gespeicherten Zündmuster werden dann sich zyklisch wiederholend der Schalteinrichtung 2 vorgegeben. Wird die Steuereinheit 4 aber durch einen Mikrocontroller oder digitalen Signalprozessor (DSP) mit ausreichend hoher Rechenleistung gebildet, kann eine Optimierung des Motors sogar auch im On-Line-Betrieb realisiert werden. Hierzu werden die Ausgangssignale von geeigneten Sensoren, wie z.B. von Drehzahl-, Strom-, Leistungs-, Temperatur-, Luftvolumen-, Luftdruck-, Luftgeschwindigkeits-, Luftfeuchtigkeits- und/oder Schwingungssensoren von der Steuereinheit 4 ausgewertet und bei der Auswahl der Zündwinkel mit berücksichtigt.

Was nun die dritte Schaltungsvariante nach Fig. 11 betrifft, so ist dabei die elektronische Schalteinrichtung 2 durch einen PWM-modulierten Wechselstromsteller gebildet, der derart ausgelegt ist bzw. angesteuert wird, daß die Wirkungsweise der Ausführungen nach Fig. 5 und/oder 8 im Grunde "nachgebildet" wird, um ebenfalls Wirkungsgrad und /oder Anlaufmoment und/oder Drehmoment-/Drehzahlkennlinie zu optimieren. Der innere Aufbau eines solchen Wechselstromstellers ist an sich bekannt und in Fig. 11 deshalb nicht näher dargestellt.

Bei einem solchen Wechselstromsteller, auch AC-Chopper genannt, läßt sich die Amplitude der Motorspannung stufenlos ändern, da hier abschaltbare Leistungsschalter, wie z.B. bipolare Transistoren, MOS-FETs, IGBTs usw., verwendet werden, die den Strom - im Gegensatz zu Triacs und Thyristoren - aktiv unterbrechen können. Dabei erfolgt typischerweise eine Taktung der Leistungsschalter mit einer Frequenz von 18 bis 20 kHz, also mit einer Frequenz, die außerhalb des menschlichen Hörvermögens liegt.

Bei einem Wechselstromsteller werden in guter Näherung sinusförmige Motorströme mit einer Grundfrequenz entsprechend der Netzfrequenz, also typischerweise mit 50 Hz bzw. 60 Hz erzeugt, wobei im Vergleich zu einer Phasenanschnittsteuerung deutlich weniger Oberschwingungen erzeugt werden. Dies ist zwar günstig für die akustischen Geräusche, da aber die Drehzahlstellung wie bei der herkömmlichen Phasenanschnittsteuerung als reine Schlupfsteuerung wirkt, weist sie den Nachteil der hohen Verlustleistung auf. Dies führt oft zu thermischen Problemen, schlechtem Wirkungsgrad und starker Lufterwärmung, was insbesondere z.B. bei Wärmetauschern den Gesamtwirkungsgrad der Anlage zusätzlich verschlechtert.

Messungen haben gezeigt, daß der Wechselstromsteller im Vergleich zu den in Fig. 5 bzw. 8 dargestellten Lösungen teilweise einen mehr als 60% erhöhten Energieverbrauch aufweist. Die in Fig. 11 dargestellte Lösung hat deshalb die Aufgabe, die Ansteuerung eines Wechselstromstellers derart vorzunehmen, daß ein den Fig. 5 bzw. 8 entsprechend hoher Wirkungsgrad erreicht werden kann.

Erfindungsgemäß wird dieser Wechselstromsteller von der Steuereinheit 4 mit einem variierbaren PWM-Verhältnis derart angesteuert; daß hierdurch - analog zu den Ausführungen nach Fig. 5 und 8 - ein entsprechender Verlauf der Motorspannung U_{M} erzeugt werden kann. Sollten z.B. ganze Halb-/Vollwelleh der Eingangsspannung gesperrt werden, so wird für den entsprechenden Phasenwinkel von 180° pro Halbwelle ein PWM-Verhältnis von 0% vorgegeben (s. Fig. 12). Ein PWM-Verhältnis von 100% bedeutet, daß die Eingangsspannung über den entsprechenden Winkel hinweg ganz durchgelassen wird. Dementsprechend ist praktisch auch ein "Phasenanschnitt" möglich, indem bis zu einem veränderbaren Phasen- bzw. Zündwinkel ϕ 0% PWM und anschließend 100% PWM vorgegeben wird.

Auch hierbei liefert die Steuereinheit 4 anhand der durch die Erfassungseinrichtung 6 erfaßten Nulldurchgänge die Steuersignale für die Leistungsschalter des Wechselstromstellers.

In Fig. 12a und b ist veranschaulicht, wie mit einer PWM-Steuerung die Spannung an Arbeits- und Hilfswicklung beeinflußt werden kann. Zu den Zeitpunkten t₁, t₃, t₅, an denen die Leistungsschalter eingeschaltet werden sollen, wird 100% PWM-Signal vorgegeben, so daß der Motor die gesamte Eingangswechselspannung U_{N} erhält. Bei 0% PWM wird die Motorspannung zu den Zeitpunkten t₂, t₄ über einen Freilaufkreis kurzgeschlossen, so daß die Motorspannung zu Null wird. Um die Verhältnisse der zuvor beschriebenen Schaltungsvarianten nach Fig. 5 und 8 noch besser nachzubilden, kann auch anstatt 0% PWM ein der EMK entsprechend geringfügig höheres PWM-Verhältnis vorgegeben werden.

Bei dem dargestellten Ausführungsbeispiel nach Fig. 12b wird eine Grundfrequenz von 25 Hz erreicht. Durch entsprechende Modulation des PWM-Signals können aber auch andere Grundfrequenzen erzeugt werden (z.B. 16²/₃ Hz, 30 Hz, 40 Hz usw.), was in der Folge zu einer Optimierung des Arbeitspunktes führt. Hierdurch können Wirkungsgrad, Anlaufmoment und/oder Drehmoment-Drehzahlkennlinie weiter verbessert werden.

Weiterhin ist es möglich, zwischen vorgeschlagener Steuerungsart und herkömmlicher Steuerung mit konstantem PWM-Verhältnis umzuschalten. Damit kann man entweder die oben aufgelisteten Verbesserungen erreichen, oder mit konstantem PWM-Verhältnis mit annähernd sinusförmigen Strömen einen geräuscharmen Betrieb erreichen. Der geräuscharme Betrieb kann z.B. in der Nacht bzw. bei Arbeitspunkten mit niedriger Drehzahl sinnvoll sein. Bei Lüfteranwendungen mit höheren Drehzahlen übertönt meist das Strömungsgeräusch das Motorgeräusch. In diesem Arbeitspunkt ist es dann sinnvoll, die vorgeschlagene Steuerung einzusetzen, um z.B. den Energieverbrauch zu minimieren.

Allerdings beschränkt sich die Erfindung nicht auf eine Steuerung mit 0% bzw. 100% PWM - Werte oder die Nachbildung einer Triac-Schaltung, sondern stellt vielmehr eine allgemeine Lösung für die Nutzung von Wechselstromstellern als Freqenzumrichter dar. Für die Änderung der Grundfrequenz werden entweder das PWM-Signal oder direkt die Einschaltund Ausschaltzeitpunkte der Leistungsschalter im Wechselstromsteller sich periodisch wiederholend gesteuert. Der dadurch erreichte Freiheitsgrad kann für die Optimierung von Wirkungsgrad, Anlaufmoment, Reduzierung akustischer Geräusche und/oder Verbesserung des EMV-Verhaltens genutzt werden.

## Patentansprüche

1. System zur Drehzahisteuerung von Wechselstrom-Asynchronmotoren, insbesondere Kondensatormotoren oder Spaltpolmotoren, wobei eine dem Motor (M) vorgeschaltete, steuerbare elektronische Schalteinrichtung (2) von einer Steuereinheit (4) so angesteuert wird, dass aus einer sinusförmigen Eingangswechselspannung (U_{N}) eine zur Drehzahlveränderung variierbare Motorwechselspannung (U_{M}) erzeugt wird, wobei die Steuereinheit (4) derart ausgebildet ist, dass die Motorwechselspannung (U_{M}) bezüglich ihrer Grundfrequenz und/oder Amplitude durch Phasenanschnitt veränderbar ist, und wobei durch die Steuereinheit (4) bestimmte Halb- oder Vollwellen der sinusförmigen Eingangswechselspannung (U_{N}) unter Bildung von Spannungslücken (L) vollständig gesperrt werden,
**dadurch gekennzeichnet,**
**dass** die nicht gesperrten Halbwellen bei Phasenanschnitt unterschiedliche, sich periodisch wiederholende Zündwinkel aulweisen und
**dass** bei auf eine Spannungslücke (L) folgenden Halbwellen der Phasenanschnittwinkei (ϕ₁) der ersten Halbwelle größer ist als der Phasenanschnittwinkel (ϕ₂) der nachfolgenden zweiten Halbwelle bzw. Halbwellen, und zwar derart, dass ein aus der so erzeugten Motorwechselspannung (U_{M}) resultierender Motorstrom (I_{M}) im Wesentlichen symmetrisch zur Null-Linie verläuft.

2. System nach Anspruch 1,
**dadurch gekennzeichnet,**
**dass** die Steuereinheit (4) die Schalteinrichtung (2) in Abhängigkeit von mittels einer Nulldurchgangserfassungseinrichtung (6) erfassten Nulldurchgängen der Eingangswechselspannung (U_{N}) ansteuert

3. System nach Anspruch 1 oder 2 zur Steuerung eines Kondensatormotors, der eine Arbeitswicklung (AW) und parallel dazu eine in Reihe mit einem Kondensator (C) liegende Hilfswicklung (HW) aufweist,
**dadurch gekennzeichnet,**
**dass** die Arbeitswicklung (AW) und die Hilfswicklung (HW) von der Steuereinheit (4) gemeinsam angesteuert werden.

4. System nach Anspruch 1 oder 2 zur Steuerung eines Kondensatormotors, der eine Arbeitswicklung (AW) und eine in Reihe mit einem Kondensator (C) liegende Hilfswicklung aufweist,
**dadurch gekennzeichnet,**
**dass** die Arbeitswicklung (AW) und die Hilfwicklung (HW) von der Steuereinheit (4) durch separate Leistungsschalter angesteuert werden.

5. System nach einem der Ansprüche 1 bis 4,
**dadurch gekennzeichnet,**
**dass** die elektronische Schalteinrichtung (2) als Leistungsschalter mindestens einen im Motor-Stromkreis liegenden Triac oder Thyristor (10; 10a, 10b) aufweist, dessen Gate (G; G_{1,} G₂) von der Steuereinheit (4) über eine Steuerleitung (12) mit einem variierbaren Zündwinkel-Muster angesteuert wird.

6. System nach einem der Ansprüche 1 bis 5,
**dadurch gekennzeichnet,**
**dass** zwischen Steuereinheit (4) und Schalteinrichtung (2) eine Treiberschaltung zwischengeschaltet ist.

7. System nach einem der Ansprüche 1 bis 6,
**dadurch gekennzeichnet,**
**dass** als Steuereiheit (4) eln Mikroprozessor oder ein Mikrocontroller oder ein digitaler Signalprozessor oder ein ASIC verwendet wird.

8. System nach einem der Ansprüche 1 bis 7,
**dadurch gekennzeichnet,**
**dass** die Steuereinheit (4) Speichermittel zum tabellarischen Speichern von verschiedenen Zündwinkelmustern für verschiedene Arbeitspunkte aufweist.

9. System nach einem der Ansprüche 1 bis 8,
**gekennzeichnet durch**,
mindestens einen Drehzahl- und/oder Leistungs- und/oder Temperatur- und/oder Luftvolumen- und/oder Luftdruck- und/oder Luftgeschwindigkeits- und/oder Luftfeuchtigkeits- und/oder Schwingungssensor, wobei die Steuereinheit (4) **durch** Auswertung der Sensorsignale die Zündwinkelmuster im Betrieb anpasst.

10. System nach einem der Ansprüche 1 bis 9,
**dadurch gekennzeichnet,**
**dass** durch geeignet gewählte Zündmuster die Motordrehrichtung veränderbar ist.

11. System nach einem der Ansprüche 1 bis 10,
**dadurch gekennzeichnet,**
**dass** die elektronische Schalteinrichtung (2) durch einen PWM-modulierten Wechselstromsteller gebildet ist.

12. System nach Anspruch 11,
**dadurch gekennzeichnet,**
**dass** die elektronische Steuereinheit (4) entweder das PWM-Verhältnis des Wechselstromstellers vorgibt, oder die Schaltzustände des Leistungsschalters direkt steuert.

13. System nach Anspruch 11 oder 12,
**dadurch gekennzeichnet,**
**dass** die Steuereinheit (4) zwischen Steuerungsart mit veränderbarer Grundfrequenz und reiner Schlupfsteuerung variierbar ist.

## Claims

1. System for controlling the rotation speed of AC asynchronous motors, in particular capacitor motors or shaded-pole motors, in which case a controllable electronic switching device (2) which is connected upstream of the motor (M) is actuated by a control unit (4) such that a sinusoidal input AC voltage (U_{N}) is used to produce a motor AC voltage (U_{M}) which can be varied in order to change the rotation speed, the control unit (4) being designed in such a manner that the fundamental frequency and/or the amplitude of the motor AC voltage (U_{M}) can be varied by phase gating and specific half-cycles or full-cycles of the sinusoidal input AC voltage (U_{N}) being completely switched off by the control unit (4), in order to form voltage gaps (L),
**characterized in that**
the half-cycles which are not switched off have different, periodically recurring triggering angles during phase gating and
**in that**, for half-cycles which follow a voltage gap (L), the phase-gating angle (ϕ₁) of the first half-cycle is greater than the phase-gating angle (ϕ₂) of the subsequent, second half-cycle or half-cycles, to be precise in such a manner that a motor current (I_{M}) resulting from the motor AC voltage (U_{M}) produced in this way has a profile which is essentially symmetrical with respect to the zero line.

2. System according to Claim 1,
**characterized in that** the control unit (4) actuates the switching device (2) as a function of zero crossings of the input AC voltage (U_{N}) detected by means of a zero-crossing detection device (6).

3. System according to Claim 1 or 2 for controlling a capacitor motor, which has a main winding (AW) and, in parallel with it, an auxiliary winding (HW) which is connected in series with a capacitor (C),
**characterized in that** the main winding (AW) and the auxiliary winding (HW) are jointly actuated by the control unit (4).

4. System according to Claim 1 or 2 for controlling a capacitor motor, which has a main winding (AW) and, in parallel with it, an auxiliary winding which is connected in series with a capacitor (C),
**characterized in that** the main winding (AW) and the auxiliary winding (HW) are actuated by means of separate power switches, by the control unit (4).

5. System according to one of Claims 1 to 4,
**characterized in that** the electronic switching device (2) has, as the power switch, at least one triac or thyristor (10; 10a, 10b) which is connected in the motor circuit and whose gate (G; G₁, G₂) is actuated with a variable triggering angle pattern by the control unit (4), via a control line (12).

6. System according to one of Claims 1 to 5,
**characterized, in that** a driver circuit is connected between the control unit (4) and the switching device (2).

7. system according to one of Claims 1 to 6,
**characterized in that** the control unit (4) is a microprocessor, a microcontroller, a digital signal processor or an ASIC.

8. System according to one of Claims 1 to 7,
**characterized in that** the control unit (4) has memory means for tabular storage of various triggering angle patterns for various operating points.

9. System according to one of Claims 1 to 8,
**characterized by** at least one sensor for the rotation speed and/or power and/or temperature and/or air volume and/or air pressure and/or air speed and/or air humidity and/or vibration or oscillation, in which case the control unit (4) adapts the triggering angle patterns during operation by evaluation of the sensor signals.

10. System according to one of Claims 1 to 9,
**characterized in that** the motor rotation direction can be varied by means of suitably selected triggering patterns.

11. System according to one of Claims 1 to 10,
**characterized in that** the electronic switching device (2) is formed by a PWM-modulated AC power controller.

12. The system according to Claim 11,
**characterized in that** the electronic control unit (4) either presets the PWM ratio of the AC power controller, or directly controls the switching states of the power switch.

13. System according to Claim 11 or 12,
**characterized in that** the control unit (4) can be varied between a control mode with a variable fundamental frequency, and pure slip control.

## Revendications

1. Système pour la commande de la vitesse de rotation de moteurs asynchrones à courant alternatif, en particulier de moteurs à condensateur ou moteurs à bague de déphasage dans lequel un dispositif de couplage électronique (2) pouvant être commandé, monté en amont du moteur (M) est piloté par une unité de commande (4) de telle manière qu'à partir d'une tension alternative d'entrée sinusoïdale (U_{N}), on produit une tension alternative de moteur (U_{M}) qu'on peut faire varier pour modifier la vitesse de rotation, l'unité de commande (4) étant construite de manière que la tension alternative du moteur (U_{M}) puisse être modifiée, en ce qui concerne sa fréquence de base et/ou son amplitude, par coupe de la phase, et les demi-ondes ou ondes complètes de la tension alternative d'entrée sinusoïdale (U_{N}) qui est déterminée par l'unité de commande (4) étant entièrement éliminées avec formation de lacunes de tension (L),
**caractérisé en ce que** les demi-ondes non éliminées présentent, lors de la coupe de phase, différents angles d'amorçage qui se répètent périodiquement, et **en ce que**, pour les demi-ondes qui suivent une lacune de tension (L), l'angle de coupe de phase (ϕ₁) de la première demi-onde est plus grand que l'angle de coupe de phase (ϕ₂) de la deuxième demi-onde suivante, ou des demi-ondes suivantes et ceci de telle manière qu'un courant de moteur (I_{M}) qui résulte de la tension alternative de moteur (U_{M}) ainsi produite soit sensiblement symétrique par rapport à la ligne de zéro.

2. Système selon la revendication 1,
**caractérisé en ce que** l'unité de commande (4) pilote le dispositif de couplage (2) en fonction de passages par zéro de la tension alternative d'entrée (U_{N}) détectés au moyen d'un dispositif de détection des passages par zéro (6).

3. Système selon la revendication 1 ou 2, pour la commande d'un moteur à condensateur qui présente un enroulement de travail (AW) et, en parallèle avec ce dernier, un enroulement auxiliaire (HW) qui se trouve en série avec un condensateur (C)
**caractérisé en ce que** l'enroulement de travail (AW) et l'enroulement auxiliaire (HW) sont pilotés en commun par l'unité de commande (4).

4. Système selon la revendication 1 ou 2, pour la commande d'un moteur à condensateur qui présente un enroulement de travail (AW) et un enroulement auxiliaire qui se trouve en série avec un condensateur (C).
**caractérisé en ce que** l'enroulement de travail (AW) et l'enroulement auxiliaire (HW) sont pilotés par l'unité de commande (4) au moyen d'interrupteurs de puissance séparés.

5. Système selon une des revendications 1 à 4,
**caractérisé en ce que** le dispositif de couplage électronique (2) présente, comme interrupteurs de puissance, au moins un triac ou thyristor (10 ; 10a, 10b) intercalé dans le circuit du moteur, dont le déclencheur (G ; G1, G2) est piloté par l'unité de commande (4) par l'intermédiaire d'une ligne de commande (12) qui possède un motif d'angle d'amorçage variable.

6. Système selon une des revendications 1 à 5,
**caractérisé en ce qu'**un circuit d'attaque est intercalé entre l'unité de commande (4) et le dispositif de couplage (2).

7. Système selon une des revendications 1 à 6,
**caractérisé en ce qu'**on utilise comme unité de commande (4) un microprocesseur ou un microcontrôleur ou encore un processeur de signaux numérique ou un ASIC.

8. Système selon une des revendications 1 à 7,
**caractérisé en ce que** l'unité de commande (4) comprend des moyens de mémoire destinés à mémoriser sous forme de tableaux différents motifs d'angle d'amorçage pour différents points de travail.

9. Système selon une des revendications 1 à 8,
**caractérisé par** au moins un capteur de vitesse de rotation et/ou de puissance et/ou de température et/ou de volume d'air et/ou de pression d'air et/ou de vitesse de l'air et/ou d'humidité de l'air et/ou de vibration, l'unité de commande (4) adaptant le motif d'angle d'amorçage en fonctionnement par analyse des signaux des capteurs.

10. Système selon une des revendications 1 à 9,
**caractérisé en ce que** le sens de rotation du moteur peut être modifié par des motifs d'amorçage convenablement choisis.

11. Système selon une des revendications 1 à 10,
**caractérisé en ce que** le dispositif de couplage électronique (2) est constitué par un gradateur de courant alternatif modulé par PWM.

12. Système selon la revendication 11,
**caractérisé en ce que** soit l'unité de commande électronique (4) prescrit le rapport de PWM du gradateur de courant alternatif, soit elle commande directement les états de couplage de l'interrupteur de puissance.

13. Système selon la revendication 11 ou 12,
**caractérisé en ce que** l'unité de commande (4) peut varier entre le mode de commande avec fréquence de base variable et la commande purement à glissement.
